# EUROPEAN PATENT SPECIFICATION

(11) **EP 2 924 552 B1**
(45) Date of publication and mention of the grant of the patent: **11.09.2019**
(21) Application number: 15151319.9
(22) Date of filing: 15.01.2015
(51) Int. Cl.: G06F 3/0488, G06F 3/023, H04M 1/725, G06F 9/451

(54) **Method and mobile terminal for executing user instructions**
Verfahren und mobiles Endgerät zur Ausführung von Benutzeranweisungen
Procédé et terminal mobile pour exécuter des instructions de l'utilisateur

(30) Priority: 28.03.2014 CN 201410130773
(43) Date of publication of application: 30.09.2015
(73) Proprietor: Xiaomi Inc., Beijing 100085 (CN)
(72) Inventor: Tang, Mu, 100085 Beijing (CN); Gao, Sitai, 100085 Beijing (CN); Zhang, Xibei, 100085 Beijing (CN); Ye, Hao, 100085 Beijing (CN)
(74) Representative: Underwood, Nicolas Patrick

(56) References cited:
- EP-A1- 1 546 872
- EP-A1- 2 523 081
- EP-A2- 2 285 077
- US-A1- 2006 092 177
- US-A1- 2008 184 173
- US-A1- 2008 320 391
- US-A1- 2014 078 091

## Description

### TECHNICAL FIELD

The present disclosure generally relates to the technical field of mobile terminals, and more particularly, to a method and a mobile terminal for executing user instructions the technical field of accessories of the mobile terminal.

### BACKGROUND

In the related art, a mobile terminal generally has a touch screen and a few physical buttons. When not in use, it is necessary to set the touch screen of the mobile terminal in a locked state to avoid mistake touch. When in use, the touch screen is unlocked, and then the mobile terminal is controlled through the touch screen. Documents US 2014/078091, US 2008/320391, US 2006/092177, EP 2 285 077, US 2008/184173, EP 2 525 081 and EP 1 546 872 disclose methods for executing user instructions.

Since there are only a few physical buttons, and a limited number of functions can be controlled by the few physical buttons, most operations are implemented through the touch screen. Thus, each time when the mobile terminal is used, it is necessary to perform operations including lighting screen, unlocking the screen, selecting applications, executing function, which is very tedious and has a low efficiency and needs a lot of operating time.

### SUMMARY

In order to overcome the problems existing in the related art, the present disclosure provides a method and a device for executing user instructions.

According to a first aspect of embodiments of the present disclosure, methods for executing user instructions are provided as defined in the claims.

According to a second aspect of embodiments of the present disclosure, mobile terminals for executing user instructions are provided as defined in the claims.

According to a third aspect of embodiments of the present disclosure, there is provided a computer program, which when executed by a computer, performs the above defined methods.

This computer program can use any programming language and take the form of source code, object code or a code intermediate between source code and object code, such as a partially compiled form, or any other desirable form.

According to a fourth aspect of embodiments of the present disclosure, there is provided a non-transitory computer readable storage medium having recorded thereon a computer program including instructions for performing the above defined methods.

The storage medium can be any entity or device capable of storing the program. For example, the storage medium can include storage means such as a ROM, for example a CD ROM or a microelectronic circuit ROM, or magnetic storage means, for example a diskette (floppy disk) or a hard disk.

Alternatively, the storage medium can be an integrated circuit in which the program is incorporated, the circuit being adapted to execute the method in question or to be used in its execution.

The technical solutions provided by embodiments of the present disclosure may include the following advantageous effects.

When using the mobile terminal, the user may directly execute the preset program string by pressing the button without unlocking the screen, the operation is simple and high accuracy, and the operational efficiency may be improved.

It is to be understood that both the foregoing general description and the following detailed description are exemplary only and are not restrictive of the present disclosure.

### BRIEF DESCRIPTION OF THE DRAWINGS

The accompanying drawings, which are hereby incorporated in and constitute a part of this specification, illustrate embodiments of the invention, and explain the principles of the invention together with the description.
Fig. 1 is a flow chart showing a method for executing user instructions according to an exemplary embodiment.
Fig. 2A is a diagram showing a mobile terminal 201 according to an exemplary embodiment.
Fig. 2B is a diagram showing a mobile terminal 201 according to an exemplary embodiment.
Fig. 3 is a diagram showing a button 205 of the headphone jack according to an exemplary embodiment.
Fig. 4 is a flow chart showing a method for executing user instructions according to an exemplary embodiment.
Fig. 4A-4G are diagrams showing a terminal interface according to an exemplary embodiment.
Fig. 5 is a flow chart showing a method for executing user instructions, according to an exemplary embodiment.
Fig. 6 is a flow chart showing a method for executing user instructions, according to an exemplary embodiment.
Fig. 7A is a block diagram showing a mobile terminal for executing user instructions according to an exemplary embodiment.
Fig. 7B is a block diagram showing a mobile terminal for executing user instructions according to an exemplary embodiment.
Fig. 8 is a block diagram showing a terminal device 800 for executing user instructions according to an exemplary embodiment.

### DETAILED DESCRIPTION

Reference will now be made in detail to exemplary embodiments, examples of which are illustrated in the accompanying drawings. The following description refers to the accompanying drawings in which the same reference numerals in different drawings represent the same or similar elements unless otherwise stated. The implementations set forth in the following description of exemplary embodiments do not represent all implementations consistent with the invention. Instead, they are merely examples of apparatuses and methods consistent with aspects related to the invention as recited in the appended claims.

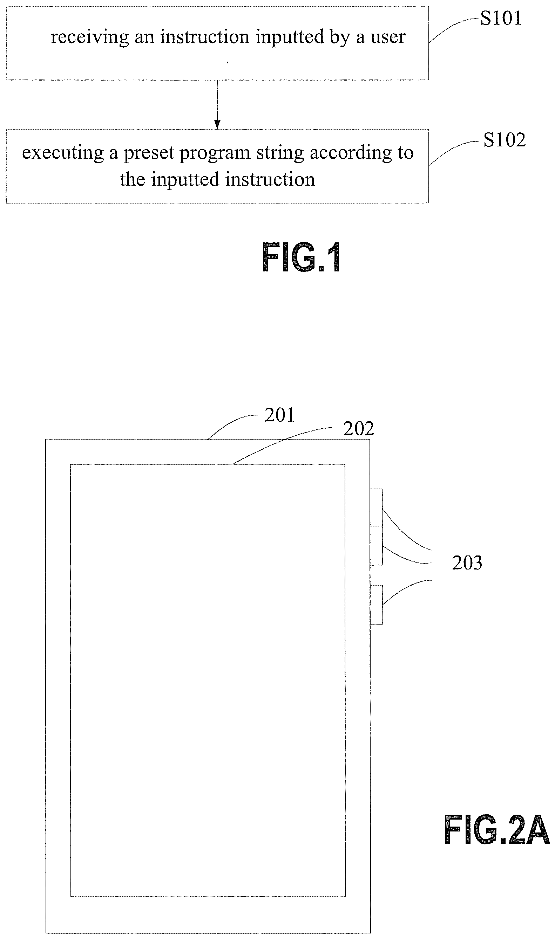

Fig. 1 is a flow chart showing a method for executing user instructions according to an exemplary embodiment. As shown in Fig. 1, the method for executing user instructions is applied to a mobile terminal and includes the following steps.

In step S101, an instruction inputted by a user is received.

The user can input instructions through the touch screen or a button of the mobile terminal, and the instructions inputted by the user are received by the mobile terminal. Fig. 2A is a diagram showing a mobile terminal 201 according to an exemplary embodiment. As shown in Fig. 2A, the user can input instructions through the touch screen 202 or a button 203 of the mobile terminal 201. The instructions inputted by the user may be single-click instructions, double-click instructions or long-press instructions.

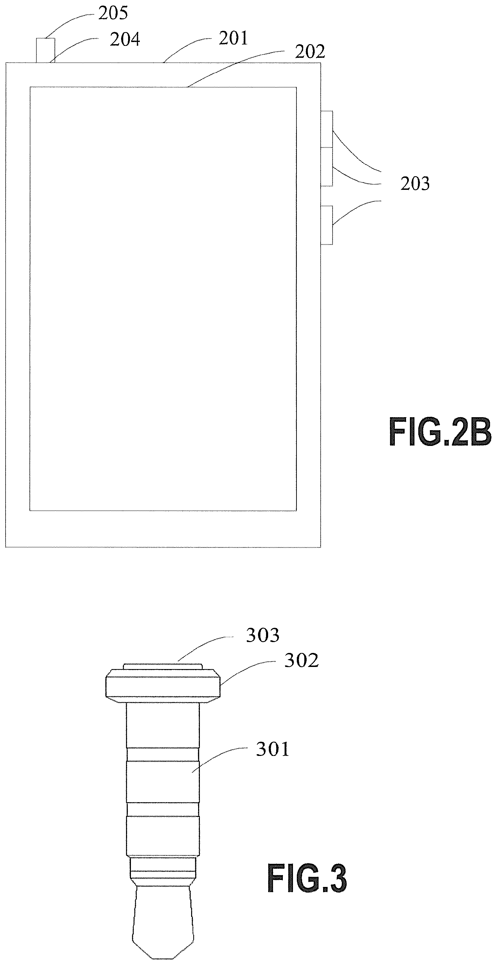

In another embodiment of the present disclosure, as shown in Fig. 2B which is a diagram showing a mobile terminal 201 according to an exemplary embodiment. The mobile terminal shown in Fig.2B differs from that shown in Fig.2A in that a button 205 of the headphone jack is provided in the headphone jack 204 of the mobile terminal 201. Thus, the user can input instructions through the button 205 of the headphone jack. As shown in Fig. 3 which is a diagram showing the button 205 of the headphone jack according to an exemplary embodiment, the button 205 of the headphone jack may include a plug 301, a body 302 and a button 303. The plug 301 is plugged in the headphone jack 204 of the mobile terminal 201. The body 302 is located outside the mobile terminal 201 after the plug is tightly plugged, thus the user can input instructions to the mobile terminal 201 by pressing the button 303, and the instruction inputted by the user through the button 303 are received by the mobile terminal 201.

In step S102, a preset program string is executed according to the inputted instruction.

The program string may be preset by the user and include at least one program or one function of the program, for example, applications such as camera, screenshot, audio recording, video recording, turn-on flashlight, calling, texting, tweeting, etc., or the system functions such as locking screen, rotating screen, clearing memory, etc. The program string may also include a program string formed by two or more programs, such as calling and audio recording, screenshot and tweeting, tweeting and sharing in a circle of friends after taking pictures, etc. The user may freely set the applications type in the program string and the order of different applications.

After a button instruction inputted by the user is received by the mobile terminal, the program string which is preset by the user and is corresponding to the button instruction is executed according to the button instruction, so that the program strings may be executed quickly.

According to the method for executing user instructions provided by the embodiments of the present disclosure, when using the mobile terminal, the user may directly execute the preset program string by pressing the button without unlocking the screen, which is simple and has high accuracy and improves the operational efficiency.

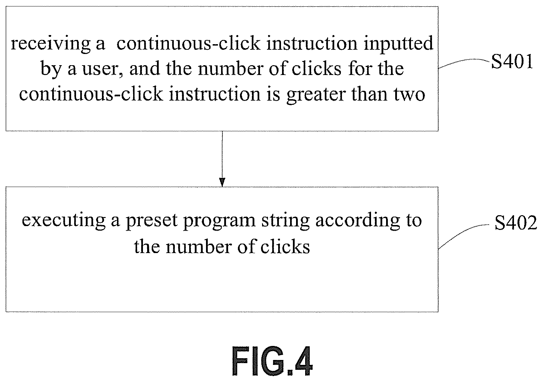

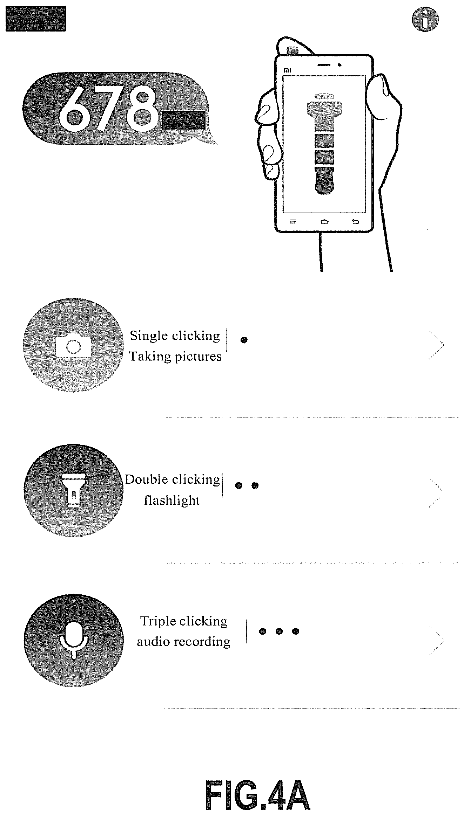

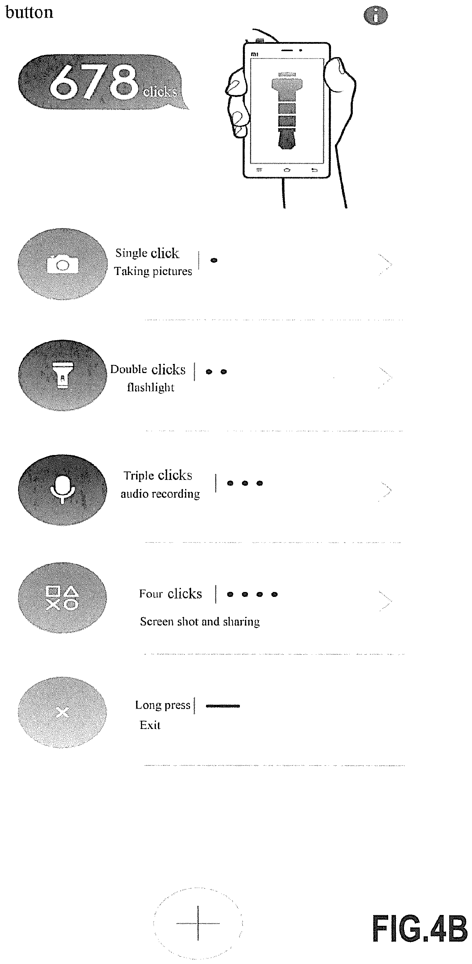

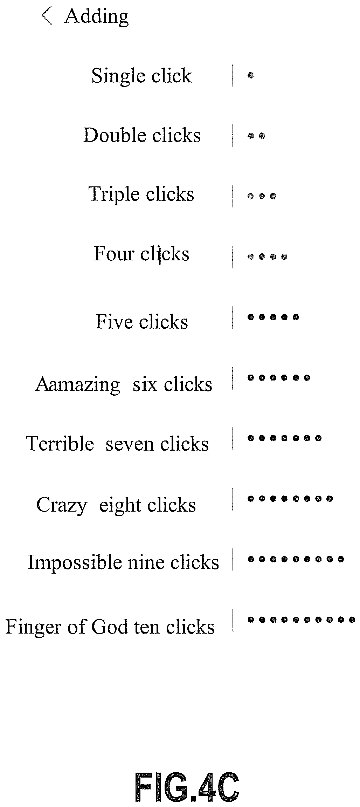

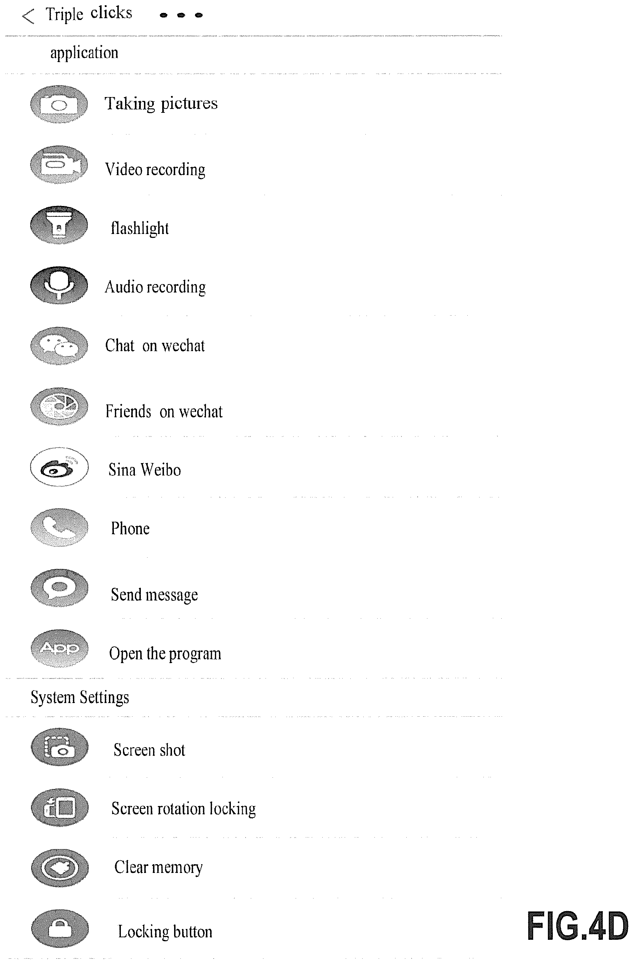

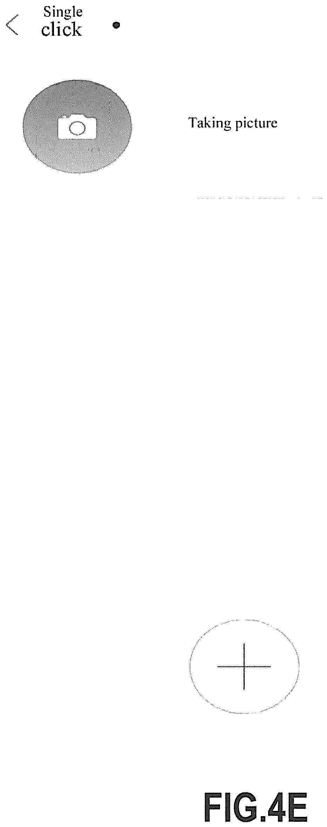

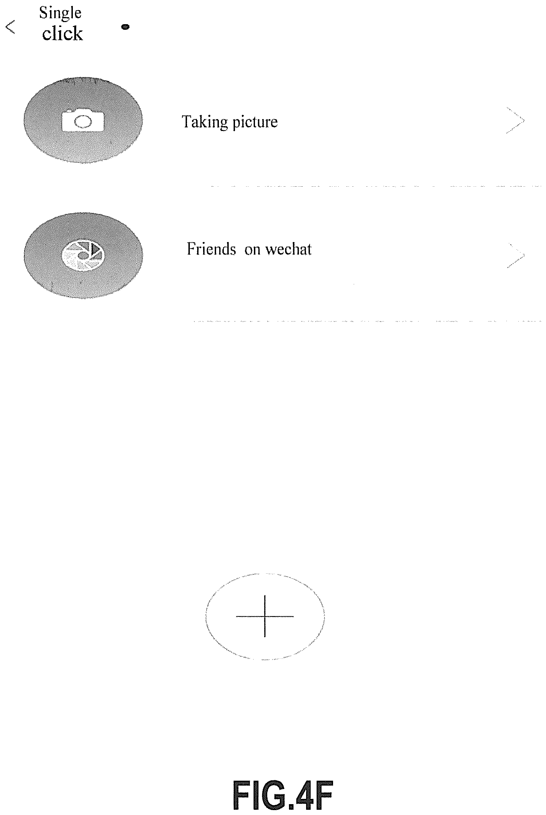

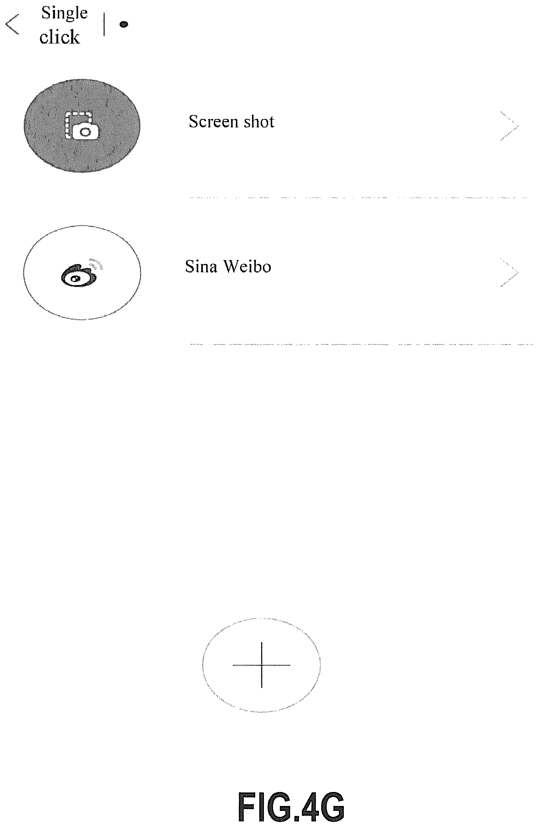

Fig. 4 is a flow chart showing a method for executing user instructions according to an exemplary embodiment. As shown in Fig. 4, the method for executing user instructions is applied to a mobile terminal and includes the following steps.

In step S401, the continuous-click instruction inputted by the user is received, and the number of clicks for the continuous-click instruction is greater than two.

When the user inputs the instruction, the instruction inputted by the user may be the continuous-click instruction, and the number of the clicks may be greater than two. The instruction inputted by the user may be detected by the mobile terminal, and thus the number of clicks may be obtained by the mobile terminal. The number of clicks may be two, three, four, 10 , 100, etc.

In step S402, a preset program string is executed according to the number of clicks.

Different numbers of clicks may correspond to the different program strings. Figs. 4A-4G are diagrams showing a terminal interface according to an exemplary embodiment. As shown in Fig.4A, according to user settings, the program string executed is to take pictures directly when the single-click instruction inputted by the user is received; the program string executed is to turn on flashlight when the double-click instruction inputted by the user is received; the program string executed is to turn on the audio recording when the triple-click instruction inputted by the user is received. The interface shown in Fig.4b differs from that shown in Fig.4A in that the program string executed is to perform the screenshot and then to perform the sharing when the four-click instruction inputted by the user is received. As shown in Fig. 4C, the user may click items for different numbers of clicks shown on this interface, and then set different program strings for the different numbers of clicks. The user may select a program string to make the selected program string be corresponding to the triple-click instruction in an interface shown in Fig. 4D.

The user may set freely the function corresponding to the single click as required when the user clicks an item for the single click in the interfaces shown in Figs. 4A-4C. In the embodiment, as shown in Fig.4E, the function corresponding to the single-click may be to take pictures directly, and the user may click an adding key at the bottom of the screen to set a second function to the program string if the user needs to further process the captured pictures. As shown in Fig.4F, the program string corresponding to the single click may be to take pictures and then to share them in the circle of friends. The program string corresponding to the single click also may be to perform the screenshot and then to perform the tweeting, as shown in Fig.4G.

According to the method for executing user instructions provided by embodiments of the present disclosure, the user may use one button to perform different functions according to the different number of continuous clicks, which may improve the extensibility of the button and simplify the user's operations.

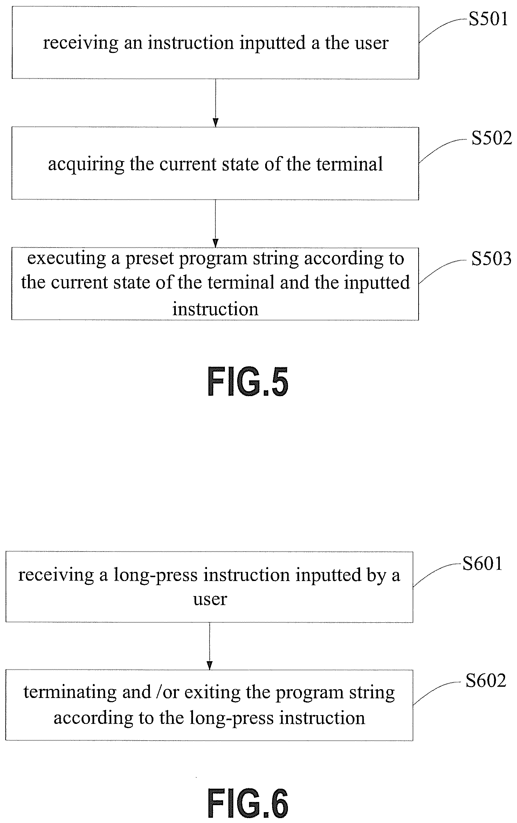

Fig. 5 is a flow chart showing a method for executing user instructions according to an exemplary embodiment. As shown in Fig. 5, the method for executing user instructions is applied to a mobile terminal and includes the following steps.

In step S501, the instruction inputted by the user is received.

In the embodiment of the present disclosure, step 501 is the same with step 101, and thus the description thereof is omitted.

In step 502, a current state of the terminal is obtained.

In the embodiment of the present disclosure, the state of the mobile terminal includes a standby state, a calling state, an audio recording state, etc.

In step S503, a preset program string is executed according to the current state of the terminal and the inputted instruction.

In the embodiment of the present disclosure, the same instruction inputted by the user may be corresponding to different program strings under different states of the mobile terminal. For example, the single-click instruction inputted by the user may be corresponding to a program string for taking pictures under the standby state; the single-click instruction inputted by the user may be corresponding to a program string for audio recording under the call state. Different program strings corresponding to a same instruction under different states can be preset by the user.

According to the method for executing user instructions provided by the embodiment of the present disclosure, the current state of the terminal may be identified and the different program strings may be matched with different states, so that the extensibility of the button may be improved and the user's operations may be simplified.

Fig. 6 is a flow chart showing a method for executing user instructions according to an exemplary embodiment. As shown in Fig. 6, the method for executing user instructions is applied to a mobile terminal and includes the following steps.

In step S601, a long-press instruction inputted by the user is received.

In the embodiment of the present disclosure, the long-press instruction inputted by the user is received by the mobile terminal. The long-press instruction may mean that the button is pressed for 0.5 second or 1 second or more, and the period for the long-press instruction may be set freely by the users according to their habits.

In step 602, the program string is terminated and/or exited based on the long-press instruction.

In the embodiment of the present disclosure, when the user inputs the long-press instruction, the mobile terminal may terminate or exit the current program string and return to the desktop state or the standby state.

According to the method for executing user instructions provided by embodiments of the present disclosure, the current program string may be terminated and exited immediately regardless of any state of the mobile terminal, and it is unnecessary to input complicated exit instructions of or to make a selection for exiting after unlocking the screen, so that the user's operations may be simplified and the operational efficiency may be improved.

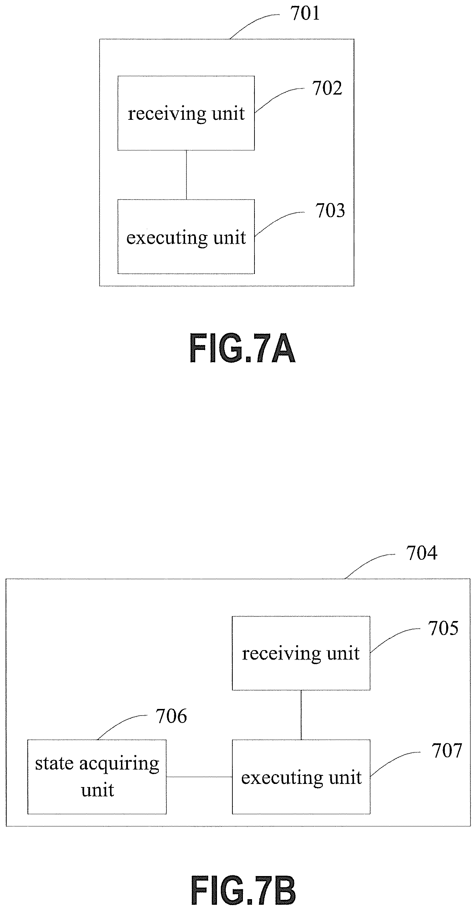

Fig. 7A is a block diagram showing a mobile terminal for executing user instructions according to an exemplary embodiment. Referring to Fig. 7A, a mobile terminal for executing user instructions 701 includes a receiving unit 702 and an executing unit 703.

The receiving unit 702 is configured to receive an instruction inputted by the user.

The executing unit 703 is configured to execute a preset program string according to the inputted instruction.

Fig. 7B is a block diagram showing a mobile terminal for executing user instructions according to an exemplary embodiment. Referring to Fig. 7B, a mobile terminal for executing user instructions 704 includes a receiving unit 705, a state acquiring unit 706 and an executing unit 707.

The receiving unit 705 is configured to receive an instruction inputted by the user.

The state acquiring unit 706 is configured to acquire a current state of the terminal.

The executing unit 707 is configured to execute a preset program string according to the current state of the terminal and the inputted instruction.

With respect to the mobile terminals described in the above embodiments, the specific operation of each module therein has been described in detail in the embodiments of the methods, the description of which will not be repeated herein.

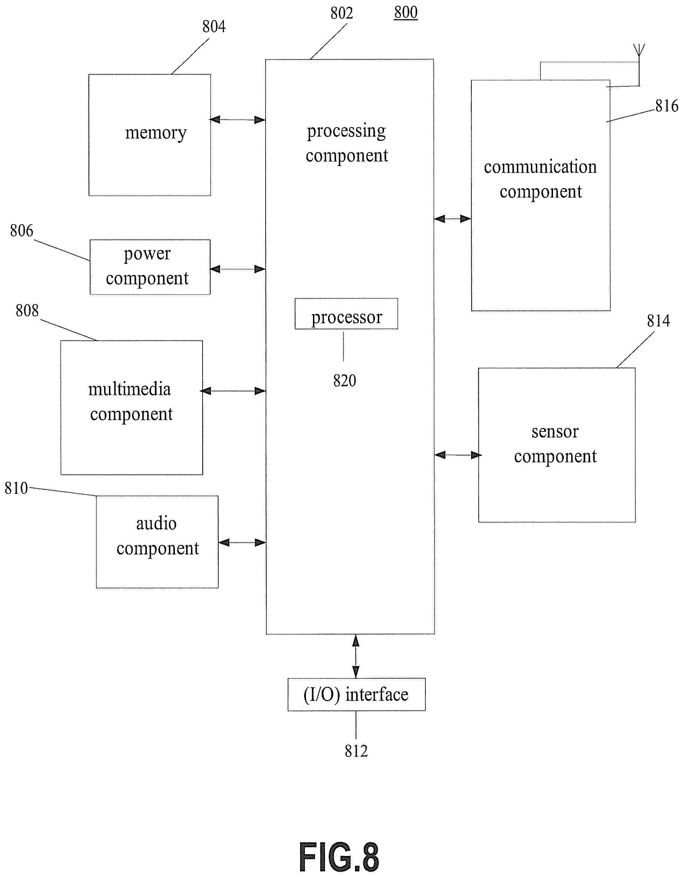

Fig. 8 is a block diagram showing a terminal device 800 for executing user instructions according to an exemplary embodiment. For example, the terminal device 800 may be a mobile phone, a computer, a digital broadcast terminal, a messaging device, a gaming console, a tablet, a medical device, exercise equipment, a personal digital assistant and the like.

Referring to Fig. 8, the terminal device 800 may include one or more of the following components: a processing component 802, a memory 804, a power component 806, a multimedia component 808, an audio component 810, an input/output (I/O) interface 812, a sensor component 814, and a communication component 816.

The processing component 802 usually controls overall operations of the terminal device 800, such as the operations associated with display, telephone calls, data communications, camera operations, and recording operations. The processing component 802 may include one or more processors 820 to execute instructions to perform all or part of the steps in the above described methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The processing component 802 is configured to receive an instruction inputted by a user, and to execute a preset program string according to the inputted instruction.

The memory 804 is configured to store various types of data to support the operation of the device 800. Examples of such data include instructions for any application or method operated on the terminal device 800, contact data, phonebook data, messages, pictures, videos, etc. The memory 804 may be implemented using any type of volatile or non-volatile memory device or combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the terminal device 800. The power component 806 may include a power management system, one or more power sources, and other components associated with the generation, management, and distribution of power in the terminal device 800.

The multimedia component 808 includes a screen providing an output interface between the terminal device 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, slips, and gestures on the touch panel. The touch sensors may not only sense a boundary of a touch or slip action, but also sense a period of time and a pressure associated with the touch or slip action. In some embodiments, the multimedia component 808 includes a front camera and/or a rear camera. The front camera and/or the rear camera may receive an external multimedia datum while the terminal device 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone ("MIC") configured to receive an external audio signal when the terminal device 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keypad, a click wheel, a button, and the like. The button may include, but not limited to, a home button, a volume button, a starting button, and a locking button.

The sensor component 814 includes one or more sensors to provide status assessments of various aspects of the terminal device 800. For instance, the sensor component 814 may detect an open/closed status of the terminal device 800, relative positioning of components, e.g., the display and the keypad, of the terminal device 800, a change in position of the terminal device 800 or a component of the terminal device 800, a presence or absence of user contact with the terminal device 800, an orientation or an acceleration/deceleration of the terminal device 800, and a change in temperature of the terminal device 800. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the terminal device 800 and other devices. The terminal device 800 can access a wireless network based on a communication standard, such as WiFi, 2G, or 3G, or a combination thereof. In one exemplary embodiment, the communication component 816 receives a broadcast signal or broadcast associated information from an external broadcast management system via a broadcast channel. In one exemplary embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the terminal device 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for executing the above described methods.

In exemplary embodiments, there is also provided a non-transitory computer readable storage medium including instructions, such as included in the memory 804, executable by the processor 820 in the terminal device 800, for executing the above-described methods. For example, the non-transitory computer-readable storage medium may be a ROM, a random access memory (RAM), a CD-ROM, a magnetic tape, a floppy disc, an optical data storage device, and the like.

A non-transitory computer readable storage medium, when instructions in the storage medium are executed by a processor of a terminal device, the terminal device may execute a method for executing user instructions, the method includes: an instruction inputted by a user is received; and a preset program string is executed according to the inputted instruction.

Alternatively, the method further includes: information about the program string preset by the user is received.

Alternatively, the receiving the instruction inputted by the use includes: a continuous-click instruction inputted by the user is received, and the number of clicks for the continuous-click instructions is greater than two.

Alternatively, the executing a preset program string according to the inputted instruction includes: the preset program string is executed according to the number of clicks.

Alternatively, the executing a preset program string according to the inputted instruction includes: the current state of the terminal is acquired; and the preset program string is executed according to a current state of the terminal and the inputted instruction.

Alternatively, the executing a preset program string according to inputted the instruction includes: at least one program is executed in a predetermined order according to the inputted instruction.

Alternatively, the receiving the instruction inputted by the user includes: a long-press instruction inputted by the user is received. The executing a preset program string according to the inputted instruction includes: the program string is terminated and/or exited according to the long-press instruction.

Other embodiments of the invention will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art. It is intended that the specification and examples be considered as exemplary only, with a true scope and spirit of the invention being indicated by the following claims.

It will be appreciated that the present invention is not limited to the exact construction that has been described above and illustrated in the accompanying drawings, and that various modifications and changes can be made without departing from the scope thereof. It is intended that the scope of the invention only be limited by the appended claims.

## Claims

1. A method for executing instructions inputted by a user applied to a mobile terminal, the method comprising:
Receiving (S101) a first instruction inputted by a user; and
Executing (S102) a preset program string according to the first inputted instruction, the step of executing a preset program string according to the first inputted instruction comprises:
executing two or more applications in a predetermined order according to the first inputted instruction,
Receiving a second instruction inputted by the user comprising receiving (S601) a long pressing instruction inputted by the user via a button or touch screen of the mobile terminal; and
**characterised in that**
Executing the preset program string according to the second inputted instruction comprises:
terminating (S602) the applications of the executed program string according to the long pressing instruction and returning to the desktop state or the standby state.

2. The method for executing user instructions according to claim 1, **characterized in that**, the method further comprises:
receiving information about the program string preset by the user.

3. The method for executing user instructions according to claim 1, **characterized in that**, the step of receiving the first instruction inputted by the user comprises:
Receiving (S401) a continuous-click instruction inputted by the user, the number of clicks for the continuous-click instructions being greater than two.

4. The method for executing user instructions according to claim 3, **characterized in that**, the step of executing a preset program string according to the first inputted instruction comprises:
Executing (S402) the preset program string according to the number of clicks.

5. The method for executing user instructions according to claim 1, **characterized in that**, the step of executing a preset program string according to the first inputted instruction comprises:
acquiring (S502) a current state of a terminal; and
executing (S503) the preset program string according to the current state of the terminal and the first inputted instruction.

6. A mobile terminal for executing instructions inputted by a user, the terminal comprising:
a receiving unit (702) configured to receive a first instruction inputted by a user; and
an executing unit (703) configured to execute a preset program string according to the first inputted instruction,
the executing unit is configured to execute two or more applications in a predetermined order according to the first inputted instruction, the receiving unit is further configured to receive a long-press second instruction inputted by the user via a button or touch screen of the mobile terminal; and
**characterised in that**
the executing unit is configured to terminate the applications of the executed program string according to the long-press instruction and return to the desktop state or the standby state.

7. The mobile terminal for executing user instructions according to claim 6, **characterized in that**, the device further comprises:
a program string setting unit configured to receive information about the program string preset by the user.

8. The mobile terminal for executing user instructions according to claim 6, **characterized in that**, the receiving unit is configured to receive a continuous-click first instruction inputted by the user, and the number of clicks for the continuous-click instruction is greater than two.

9. The mobile terminal for executing user instructions according to claim 8, **characterized in that**, the executing unit is configured to execute the preset program string according to the number of clicks.

10. The mobile terminal for executing user instructions according to claim 6, **characterized in that**, the device further comprises:
a state acquiring unit (706) configured to acquire a current state of a terminal; and
an executing unit (707) configured to execute the preset program string according to the current state of the terminal and the first inputted instruction.

11. A computer program, which when executed by a mobile terminal, performs a method according to any one of claims 1 to 5.

12. A non-transitory computer readable storage medium having recorded thereon a computer program including instructions for performing a method according to any one of claims 1 to 5.

## Patentansprüche

1. Verfahren zum Ausführen von Anweisungen, die von einem Benutzer eingegeben und auf ein mobiles Endgerät angewendet werden, wobei das Verfahren umfasst:
Empfangen (S101) einer ersten von einem Benutzer eingegebenen Anweisung und
Ausführen (S102) einer voreingestellten Programmfolge gemäß der ersten eingegebenen Anweisung, wobei der Schritt des Ausführens einer voreingestellten Programmfolge gemäß der ersten eingegebenen Anweisung umfasst:
Ausführen von zwei oder mehr Anwendungen in einer vorbestimmten Reihenfolge gemäß der ersten eingegebenen Anweisung,
Empfangen einer zweiten von dem Benutzer eingegebenen Anweisung, umfassend Empfangen (S601) einer Anweisung durch langes Drücken, die von dem Benutzer über eine Schaltfläche oder einen Touchscreen des mobilen Endgeräts eingegeben wird, und
**dadurch gekennzeichnet, dass**
das Ausführen der voreingestellten Programmfolge gemäß der zweiten eingegebenen Anweisung umfasst:
Beenden (S602) der Anwendungen der ausgeführten Programmfolge gemäß der Anweisung durch langes Drücken und Zurückkehren zu einem Desktop-Zustand oder einem Standby-Zustand.

2. Verfahren zum Ausführen von Benutzeranweisungen nach Anspruch 1, **dadurch gekennzeichnet, dass** das Verfahren ferner umfasst:
Empfangen von Informationen über die von dem Benutzer voreingestellte Programmfolge.

3. Verfahren zum Ausführen von Benutzeranweisungen nach Anspruch 1, **dadurch gekennzeichnet, dass** der Schritt des Empfangens der ersten von dem Benutzer eingegebenen Anweisung umfasst:
Empfangen (S401) einer von dem Benutzer durch fortgesetztes Klicken eingegebenen Anweisung, wobei die Anzahl von Klicks für die Anweisung durch fortgesetztes Klicken größer als zwei ist.

4. Verfahren zum Ausführen von Benutzeranweisungen nach Anspruch 3, **dadurch gekennzeichnet, dass** der Schritt des Ausführens einer voreingestellten Programmfolge gemäß der ersten eingegebenen Anweisung umfasst:
Ausführen (S402) der voreingestellten Programmfolge gemäß der Anzahl von Klicks.

5. Verfahren zum Ausführen von Benutzeranweisungen nach Anspruch 1, **dadurch gekennzeichnet, dass** der Schritt des Ausführens einer voreingestellten Programmfolge gemäß der ersten eingegebenen Anweisung umfasst:
Erlangen (S502) eines aktuellen Zustands eines Endgeräts und
Ausführen (S503) der voreingestellten Programmfolge gemäß dem aktuellen Zustand des Endgeräts und der ersten eingegebenen Anweisung.

6. Mobiles Endgerät zum Ausführen von von einem Benutzer eingegebenen Anweisungen, wobei das Endgerät umfasst:
eine Empfangseinheit (702), die dazu ausgestaltet ist, eine erste von einem Benutzer eingegebene Anweisung zu empfangen, und
eine Ausführungseinheit (703), die dazu ausgestaltet ist, eine voreingestellte Programmfolge gemäß der ersten eingegebenen Anweisung auszuführen,
wobei die Ausführungseinheit dazu ausgestaltet ist, zwei oder mehr Anwendungen in einer vorbestimmten Reihenfolge gemäß der ersten eingegebenen Anweisung auszuführen,
wobei die Empfangseinheit ferner dazu ausgestaltet ist, eine zweite Anweisung durch langes Drücken zu empfangen, die von dem Benutzer über eine Schaltfläche oder einen Touchscreen des mobilen Endgeräts eingegeben wird, und
**dadurch gekennzeichnet, dass**
die Ausführungseinheit dazu ausgestaltet ist, die Anwendungen der ausgeführten Programmfolge gemäß der Anweisung durch langes Drücken zu beenden und zu einem Desktop-Zustand oder einem Standby-Zustand zurückzukehren.

7. Mobiles Endgerät zum Ausführen von Benutzeranweisungen nach Anspruch 6, **dadurch gekennzeichnet, dass** die Vorrichtung ferner umfasst:
eine Programmfolge-Einstellungseinheit, die dazu ausgestaltet ist, Informationen über die von dem Benutzer voreingestellte Programmfolge zu empfangen.

8. Mobiles Endgerät zum Ausführen von Benutzeranweisungen nach Anspruch 6, **dadurch gekennzeichnet, dass** die Empfangseinheit dazu ausgestaltet ist, eine erste von dem Benutzer durch fortgesetztes Klicken eingegebene Anweisung zu empfangen, wobei die Anzahl von Klicks für die Anweisung durch fortgesetztes Klicken größer als zwei ist.

9. Mobiles Endgerät zum Ausführen von Benutzeranweisungen nach Anspruch 8, **dadurch gekennzeichnet, dass** die Ausführungseinheit dazu ausgestaltet ist, die voreingestellte Programmfolge gemäß der Anzahl von Klicks auszuführen.

10. Mobiles Endgerät zum Ausführen von Benutzeranweisungen nach Anspruch 6, **dadurch gekennzeichnet, dass** die Vorrichtung ferner umfasst:
eine Zustands-Erlangungseinheit (706), die dazu ausgestaltet ist, einen aktuellen Zustand eines Endgeräts zu erlangen, und
eine Ausführungseinheit (707), die dazu ausgestaltet ist, die voreingestellte Programmfolge gemäß dem aktuellen Zustand des Endgeräts und der ersten eingegebenen Anweisung auszuführen.

11. Computerprogramm, das bei Ausführung durch ein mobiles Endgerät ein Verfahren nach einem der Ansprüche 1 bis 5 durchführt.

12. Nicht transitorisches computerlesbares Speichermedium, auf dem ein Computerprogramm aufgezeichnet ist, das Anweisungen zum Durchführen eines Verfahrens nach einem der Ansprüche 1 bis 5 beinhaltet.

## Revendications

1. Procédé pour exécuter des instructions entrées par un utilisateur appliqué à un terminal mobile, le procédé comprenant :
la réception (S101) d'une première instruction entrée par un utilisateur ; et
l'exécution (S102) d'une chaîne de programme prédéfinie en fonction de la première instruction entrée, l'étape d'exécution d'une chaîne de programme prédéfinie en fonction de la première instruction entrée comprend :
l'exécution de deux applications ou plus dans un ordre prédéterminé en fonction de la première instruction entrée,
la réception d'une seconde instruction entrée par l'utilisateur comprend la réception (S601) d'une instruction d'appui long entrée par l'utilisateur via un bouton ou un écran tactile du terminal mobile ; et
**caractérisé en ce que**
l'exécution de la chaîne de programme prédéfinie en fonction de la seconde instruction entrée comprend :
le fait de mettre fin (S602) aux applications de la chaîne de programme exécutée en fonction de l'instruction d'appui long et le retour à l'état de bureau ou à l'état de veille.

2. Procédé pour exécuter des instructions d'utilisateur selon la revendication 1, **caractérisé en ce que**, le procédé comprend en outre :
la réception d'informations sur la chaîne de programme prédéfinie par l'utilisateur.

3. Procédé pour exécuter des instructions d'utilisateur selon la revendication 1, **caractérisé en ce que**, l'étape de réception de la première instruction entrée par l'utilisateur comprend :
la réception (S401) d'une instruction de clic continu entrée par l'utilisateur, le nombre de clics pour les instructions de clic continu étant supérieur à deux.

4. Procédé pour exécuter des instructions d'utilisateur selon la revendication 3, **caractérisé en ce que**, l'étape d'exécution d'une chaîne de programme prédéfinie en fonction de la première instruction entrée comprend :
l'exécution (S402) de la chaîne de programme prédéfinie en fonction du nombre de clics.

5. Procédé pour exécuter des instructions d'utilisateur selon la revendication 1, **caractérisé en ce que**, l'étape d'exécution d'une chaîne de programme prédéfinie en fonction de la première instruction entrée comprend :
l'acquisition (S502) d'un état actuel d'un terminal ; et
l'exécution (S503) de la chaîne de programme prédéfinie en fonction de l'état actuel du terminal et de la première instruction entrée.

6. Terminal mobile pour exécuter des instructions entrées par un utilisateur, le terminal comprenant :
une unité de réception (702) configurée pour recevoir une première instruction entrée par un utilisateur ; et
une unité d'exécution (703) configurée pour exécuter une chaîne de programme prédéfinie en fonction de la première instruction entrée,
l'unité d'exécution est configurée pour exécuter deux applications ou plus dans un ordre prédéterminé en fonction de la première instruction entrée,
l'unité de réception est en outre configurée pour recevoir une seconde instruction d'appui long entrée par l'utilisateur via un bouton ou un écran tactile du terminal mobile ; et
**caractérisé en ce que**
l'unité d'exécution est configurée pour mettre fin aux applications de la chaîne de programme exécutée en fonction de l'instruction d'appui long et retourner à l'état de bureau ou à l'état de veille.

7. Terminal mobile pour exécuter des instructions d'utilisateur selon la revendication 6, **caractérisé en ce que**, le dispositif comprend en outre :
une unité de définition de chaîne de programme pour recevoir des informations sur la chaîne de programme prédéfinie par l'utilisateur.

8. Terminal mobile pour exécuter des instructions d'utilisateur selon la revendication 6, **caractérisé en ce que**, l'unité de réception est configurée pour recevoir une première instruction de clic continu entrée par l'utilisateur, et le nombre de clics pour l'instruction de clic continu est supérieur à deux.

9. Terminal mobile pour exécuter des instructions d'utilisateur selon la revendication 8, **caractérisé en ce que**, l'unité d'exécution est configurée pour exécuter la chaîne de programme prédéfinie en fonction du nombre de clics.

10. Terminal mobile pour exécuter des instructions d'utilisateur selon la revendication 6, **caractérisé en ce que**, le dispositif comprend en outre :
une unité d'acquisition d'état (706) configurée pour acquérir un état actuel d'un terminal ; et
une unité d'exécution (707) configurée pour exécuter la chaîne de programme prédéfinie en fonction de l'état actuel du terminal et de la première instruction entrée.

11. Programme informatique qui, lorsqu'il est exécuté par un terminal mobile, effectue un procédé selon l'une quelconque des revendications 1 à 5.

12. Support de stockage lisible par ordinateur non transitoire sur lequel est enregistré un programme informatique incluant des instructions pour effectuer un procédé selon l'une quelconque des revendications 1 à 5.
